(19)

Europäisches
Patentamt

European
Patent Office

Office européen
des brevets

(11) **EP 4 290 805 A1**

(12) **EUROPEAN PATENT APPLICATION**

(43) Date of publication:
**13.12.2023 Bulletin 2023/50**

(21) Application number: **22305843.9**

(22) Date of filing: **09.06.2022**

(51) International Patent Classification (IPC):
*H04L 9/30* *(2006.01)* *H04L 9/32* *(2006.01)*

(52) Cooperative Patent Classification (CPC):
**H04L 9/3257; H04L 9/3093; H04L 9/3218**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **PQshield Ltd**
**Oxford, Oxfordshire OX2 7HT (GB)**

(72) Inventors:
• **DEL PINO, Rafael**
**75001 Paris (FR)**
• **KATSUMATA, Shuichi**
**75001 PARIS (FR)**

(74) Representative: **EIP**
**Fairfax House**
**15 Fulwood Place**
**London WC1V 6HU (GB)**

(54) **BLIND SIGNATURE SYSTEM AND METHOD USING LATTICE-BASED CRYPTOGRAPHY**

(57) There is disclosed provided a computer-implemented method of generating a signature for a message. A user device processes the message and random data to generate a commitment for the message, and transmits the commitment to a signer device. The signer device derives a target vector from the commitment and samples, using a secret trapdoor function, a short vector that solves a lattice problem involving the target vector. The signer device then sends the short vector to the user device, which verifies that the short vector solves the lattice problem. Following successful verification of the short vector, the user device generates a signature establishing knowledge of the short vector based on the message and public data.

**FIG. 1**

EP 4 290 805 A1

**Description**

Technical Field

The disclosure relates to a system and a method for generating a blind signature using lattice-based cryptography.

Background

Blind signatures are interactive protocols between a user and a signer enabling the user to obtain a signature for a message from the signer without the revealing the message to the signer. At the end of the protocol, the user obtains a valid signature for the message under the secret key of the signer. To be secure, the blind signature scheme is such that the signer does not know the message and the secret key is confidential to the signer. Applications of blind signatures include e-cash, anonymous credentials and e-voting.

A digital signature scheme generally involves three functions:

- Skeygen which generates a signing key $sk$ and a verification key $vk$;
- Sign which generates a signature using the signing key $sk$; and
- Verify which allows the signature to be verified using the verification key $vk$.

A blind signature scheme may make use of commitments and Non-Interactive-Zero-Knowledge (NIZK) proofs of knowledge.

A commitment scheme generally involves a tuple of three functions:

- Ckeygen which generates public parameters;
- Com($m,r$) which outputs a commitment c to a message $m$ using random data $r$; and
- Open($c,r$) which uses the random data $r$ to open the commitment $c$ to the message $m$.

The commitment scheme has a binding property that ensures that the commitment $c = com(m,r)$ cannot be opened to any message other than $m$, and a hiding property that ensures that the commitment $c$ appears completely random even if the message $m$ corresponding to the commitment $c$ is known.

An NIZK proof of knowledge is a non-interactive proof of knowledge that can be used to prove knowledge of a secret without revealing the secret. For security purposes, an NIZK proof of knowledge scheme must be zero-knowledge in that the scheme does not leak any information about the secret, and sound in that only a prover knowing the secret can output a valid proof.

By way of example, a blind signature scheme is set out below:

$$
\begin{array}{ll}
\underline{\Pi_{\mathrm{BS}} : \mathcal{S}(sk)} & \underline{\mathcal{U}(vk,m)} \\[4pt]
 & r,u \leftarrow \{0,1\}^n \\
 \xleftarrow{\quad c \quad} & c := \mathrm{Com}(m,r) \\
\sigma \leftarrow \mathrm{Sign}(sk,c) & \\
\xrightarrow{\quad \sigma \quad} & \\[8pt]
 & \mathrm{Verify}(vk,c,\sigma) \\
 & ct := \mathrm{Enc}(pk,c\|\sigma);u) \\
 & \pi \leftarrow \Pi((ct,m),(r,u,\sigma)) \\
 & \mathrm{return}\ (ct,\pi)
\end{array}
$$

The user $U$ knows a message $m$ and the verification key $vk$ and the signer S knows the signing key $sk$. The user U randomly samples random data $r$ and random data $u$. The user then generates a commitment $c$ using Com($m,r$) and sends the commitment to the signer S. Following receipt of the commitment $c$, the signer S signs the commitment $c$ using the signing key $sk$ to generate a signature $\sigma$. The signer S then sends the signature $\sigma$ to the user U. The user U then verifies the signature is a valid signature for the commitment $c$ using Verify($vk,c,\sigma$), and following successful validation encrypts the commitment $c$, the signature $\sigma$ and the random data $u$ using a public key $pk$ to generate a ciphertext $c$. The user U then generates a proof $\pi$ that allows anyone knowing the message, the ciphertext $ct$ and the proof $\pi$ to establish that the user U has knowledge of a valid signature $\sigma$ for a commitment of the message $m$.

Lattice-based cryptography denotes a family of cryptographic schemes whose security is based on the hardness of mathematical problems over lattices. Most lattice-based cryptographic schemes are considered to be post-quantum through being conjectured to be resistant to attacks by malicious parties having access to a hypothetical large-scale quantum computer. Accordingly, lattice-based cryptographic schemes are attracting increasing interest to prepare for when such large-scale quantum computers become a reality.

In this specification, the following notation will be used:

- a vector is represented in lowercase bold font (e.g. **t**);
- a matrix is represented in uppercase bold font (e.g. **A**);
- $\mathcal{R}_q$ is the base ring, which is commutative: it may for example be a quotient ring of the form $\mathbb{Z}_q[x]/(x^n + 1)$, where $\mathbb{Z}_q = \mathbb{Z}/q\mathbb{Z}$ is the ring of integers modulo q;
- the notation x ← S means that $x$ is sampled uniformly at random from the set S.

Lattice-based cryptographic schemes generally entail computing matrix-vector products **A·x**, where **x** is subject to some constraints. The short integer solution (SIS) problem and the learning with errors (LWE) problem are staples of lattice-based cryptography. In brief:

- Given **A, t,** the SIS problem consists of finding a short secret vector s such that **A· s = t;**
- Given **A, t,** the LWE problem consists of finding vectors **s** and **e** such that **A· s + e = t,** with the error vector **e** being short and the secret vector s being unconstrained (uniform secret LWE) or required to be short (short secret LWE).

There are various problems associated with using a lattice-based cryptographic scheme in a blind signature scheme such as the one described above. In particular, the proof of knowledge needed is specific and has to prove a complex relation, a problem which is exacerbated by the fact that all efficient lattice-based signature schemes first generate a hash of the message before signing so that the relation that is being proven is no longer that σ = sign(*sk,c*) but instead that σ = sign(*sk,H(c)*). This implies that the security of the scheme is not formally provable because security requires the hash function *H* to be modelled as a random oracle but the NIZK proof of knowledge requires an explicit description of the hash function. In addition, and perhaps more importantly, proving properties of hash functions in zero knowledge is very complicated and this results in very inefficient schemes.

Summary

According to a first aspect of the present invention, there is provided a computer-implemented method of generating a signature for a message. A user device processes the message and random data to generate a commitment for the message, and transmits the commitment to a signer device. The signer device derives a target vector from the commitment and samples, using a secret trapdoor function, a short vector that solves a lattice problem involving the target vector. The signer device then sends the short vector to the user device, which verifies that the short vector solves the lattice problem. Following successful verification of the short vector, the user device generates a signature establishing knowledge of the short vector based on the message and public data.

According to a second aspect of the invention, there is provided a user device comprising a processor to process a message and random data to generate a commitment for the message. The user device further comprises a transmitter to transmit the commitment to a signer device and a receiver to receive, in response to the transmission of the commitment, a short vector from the signer device. The processor is then configured to verify that the short vector solves a lattice problem and following successful verification of the short vector, generate a signature establishing knowledge of the short vector based on the message and public data.

According to a third aspect of the invention, there is provided a device for signing a message, the device having access to a secret trapdoor function. The device comprises a receiver to receive a commitment from a user device, the commitment corresponding to a message to be signed, and a processor configured to derive a target vector from the commitment and sample, using the secret trapdoor function, a short vector that solves a lattice problem involving the target vector. The device further comprises a transmitter to transmit the short vector to the user device.

Further features and advantages of the invention will become apparent from the following description of preferred embodiments of the invention, given by way of example only, which is made with reference to the accompanying drawings.

Brief Description of the Drawings

Figure 1 schematically shows an overview of the messages in a blind signature scheme according to an example;
Figure 2 is a flow chart schematically showing the operations performed to generate a blind signature in the blind signature scheme of Figure 1.

Detailed Description

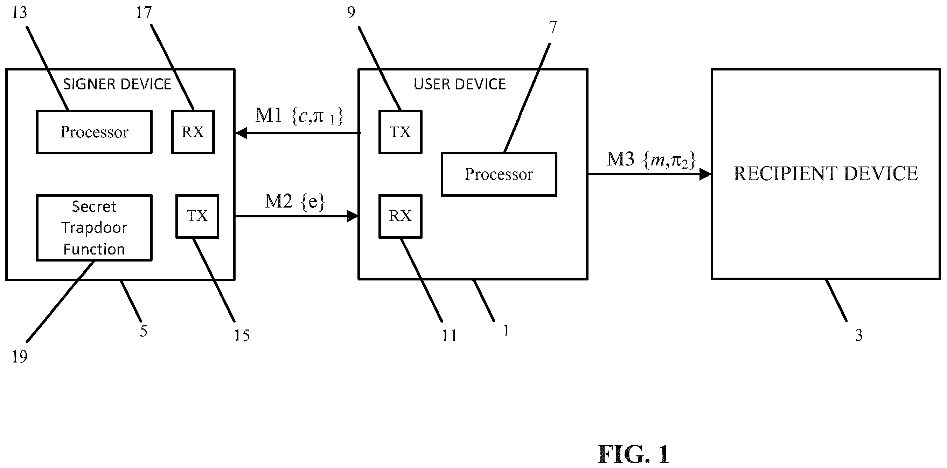

Figure 1 shows computing system including a user device 1, a recipient device 3 and a signer device 5. Figure 1 also shows the messaging performed to send a message $m$ from the user device 1 to the recipient device 3 with a blind signature provided by the signer device 5.

The user device 1 includes a processor 7 configured to perform cryptographic functions, a transmitter 9 and a receiver 11. Similarly, the signer device 5 includes a processor 13 configured to perform cryptographic functions, a transmitter 15 and a receiver 17. The signer device 5 also has access to a secret trapdoor function 19.

As shown, the user device 1 sends, using the transmitter 9, a first message M1 conveying a commitment $c$ for the message $m$ and a first Non-Interactive-Zero-Knowledge (NIZK) proof $\pi_1$ to the receiver 17 of the signer device 5. As will be discussed below, the commitment $c$ is generated by the user device 1 based on the message $m$, a publicly available gadget vector **g** and some random data $r$, and the user device 1 also generates the first NIZK proof $\pi_1$ which establishes that the commitment $c$ opens to the message $m$.

The commitment c is a trapdoor sampling compatible commitment and the signer device 5. In this way, the signer device 5 is able to use the secret trapdoor function 19 to solve a lattice problem that would otherwise be hard to solve. The lattice problem is difficult to solve without knowledge of the secret trapdoor function 19, and therefore the blind signature scheme works on the assumption that a valid solution of the lattice problem must have been generated using the secret trapdoor function 7. In this regard, it is noted that the lattice problem is resistant to attacks using either or both of classical computing systems and quantum computing systems. As such, the solution to the lattice problem is resistant even to an attack by a malicious party having access to a large-scale quantum computer. This property allows the blind signature scheme of this example to be considered "post-quantum".

In this example, the lattice problem is to sample a vector $\mathbf{e} \in \mathcal{R}^{k(2+k)}$ such that:

$$\begin{bmatrix} \mathbf{a}_1 \mid \mathbf{a}_2 + \mathbf{t} \mid \mathbf{b}_1 \mid \ldots \mid \mathbf{b}_k \end{bmatrix} \mathbf{e}^\top = u$$

$$\wedge \, \|\mathbf{e}\| \leq B$$

where $\mathbf{a}_1$, $\mathbf{a}_2$, $\mathbf{b}_1$ ... $\mathbf{b}_k$ are publicly available vectors that are uniform in $\mathcal{R}_q^k$, $\mathbf{t}$ is a target vector derived from the commitment $c$ using a publicly available function ParseCom($c$), $u$ is a publicly available value randomly sampled from $\mathcal{R}_q$ and $B$ is a publicly available bounding value. Given the constraint on the length of the vector $\mathbf{e}$, the vector e will hereafter be referred to as the short vector $\mathbf{e}$. The secret trapdoor function 19 is associated with the public vector $\mathbf{a}_1$ (and will accordingly hereafter be referred to sometimes as the trapdoor function $\mathbf{T}_{a1}$), and has the property that for any $n > 0$, any

$$\mathbf{v}$$

$$\in \mathcal{R}_q^n,$$

and any

$$u \in \mathcal{R}_q,$$

the signer device 5 can sample $\mathbf{e} \in R_q^{k+n}$ such that $[\mathbf{a_1} \mid \mathbf{v}] \cdot e = u$ and $\|\mathbf{e}\| < B.$

The signer device 5 then uses the transmitter 15 to send a second message M2 to receiver 11 of the user device 1 conveying the short vector **e**. The user device 1 can then verify that the short vector **e** is a valid solution to the lattice problem, given that the user device 1 can determine the target vector **t** using the function ParseCom($c$) and the remaining data in the lattice problem is publicly available. After the user device 1 has verified that the short vector **e** is valid, knowledge of the short vector **e** by the user device 1 can be used as evidence that a short vector **e** for the commitment $c$ was determined by the signer device 5.

In this example, the signer device 5 then generates a second NIZK proof $\pi_2$ that will act as the blind signature for the message $m$. In this regard, it is important for security purposes that the second NIZK proof $\pi_2$ requires only publicly available information such that the second NIZK proof $\pi_2$ does not depend on any information that is specific to this execution of the protocol so that the information cannot be linked to the protocol when revealed. Accordingly, the second NIZK proof $\pi_2$ should not disclose information about the random data used to generate the commitment or the target vector used to generate the short vector **e**. To achieve this, the signer device 5 reformulates the lattice problem into the form $\tilde{\mathbf{a}} \cdot \tilde{\mathbf{e}} = u$, where:

$$
\begin{aligned}
\tilde{\mathbf{a}} \cdot \tilde{\mathbf{e}}^\top &= [\mathbf{a}_1 \mid \mathbf{a}_2 + h\mathbf{g} \mid \mathbf{b}_1 \mid \ldots \mid \mathbf{b}_k] \cdot [\mathbf{e}_1 \mid \mathbf{e}_2 \mid e_{2,1}\mathbf{r}_1 + \mathbf{e}_{3,1} \mid \ldots \mid e_{2,k}\mathbf{r}_k + \mathbf{e}_{3,k}]^\top \\
&= \mathbf{a}_1 \cdot \mathbf{e}_1^\top + (\mathbf{a}_2 + h\mathbf{g}) \cdot \mathbf{e}_2^\top + \mathbf{b}_1 \cdot \mathbf{e}_{3,1}^\top + \ldots \mathbf{b}_k \cdot \mathbf{e}_{3,k}^\top + e_{2,1}\mathbf{b}_1 \cdot \mathbf{r}_1^\top + \ldots + e_{2,k}\mathbf{b}_k \cdot \mathbf{r}_r^\top \\
&= \mathbf{a}_1 \cdot \mathbf{e}_1^\top + \mathbf{a}_2 \cdot \mathbf{e}_2^\top + \left( \begin{bmatrix} \mathbf{b}_1 & & \mathbf{0} \\ & \ddots & \\ \mathbf{0} & & \mathbf{b}_k \end{bmatrix} \cdot \begin{bmatrix} \mathbf{r}_1^\top \\ \vdots \\ \mathbf{r}_k^\top \end{bmatrix} + h\mathbf{g} \right) \cdot \mathbf{e}_2^\top + \mathbf{b}_1 \cdot \mathbf{e}_{3,1}^\top + \ldots \mathbf{b}_k \cdot \mathbf{e}_{3,k}^\top \\
&= \mathbf{a}_1 \cdot \mathbf{e}_1^\top + \mathbf{a}_2 \cdot \mathbf{e}_2^\top + \mathbf{t} \cdot \mathbf{e}_2^\top + \mathbf{b}_1 \cdot \mathbf{e}_{3,1}^\top + \ldots \mathbf{b}_k \cdot \mathbf{e}_{3,k}^\top \\
&= [\mathbf{a}_1 \mid \mathbf{a}_2 + \mathbf{t} \mid \mathbf{b}_1 \mid \ldots \mid \mathbf{b}_k] \, \mathbf{e}^\top
\end{aligned}
$$

where **g** is the publicly available gadget vector, $\mathbf{r_1}$ ... $\mathbf{r_k}$ are vectors derived from the random data $r$ and $e_{2,1}$ refers to the i-th co-efficient of $\mathbf{e_2}$. By this formulation, the vector $\tilde{\mathbf{a}}$ consists of publicly available information whereas the vector $\tilde{\mathbf{e}}$, hereafter referred to as the modified short vector $\tilde{\mathbf{e}}$, includes information from the short vector **e** and the random data. In this example, the second NIZK proof $\pi_2$ establishes from the vector $\tilde{\mathbf{a}}$ and the value $u$ that the signer has the short vector **e**. In this way, given that the vector $\tilde{\mathbf{a}}$ is derived using the hash $h$ of the message $m,$ the second NIZK proof $\pi_2$ acts as a signature.

A person skilled in the art will appreciate that form of the second NIZK proof $\pi_2$ is straightforward and does not require information regarding the manner in which the hash function generates the hash $h$ of the message $m$. Indeed, there are known proofs for establishing, based on knowledge of a public vector (e.g. the vector $\tilde{\mathbf{a}}$) and a polynomial (e.g. the random data $u$), knowledge of a secret vector (e.g. the modified short vector $\tilde{\mathbf{e}}$).

The user device 1 then sends a third message M3 to the recipient device 3 conveying the message and the second NIZK proof $\pi_2$. The recipient can then verify the second NIZK proof $\pi_2$ to validate the message $m$.

The blind signature scheme described above with reference to Figure 1 involves a single message M1 sent from the user device 1 to the signer device 5 and a single message M2 sent from the signer device 5 to the user device 1. As such, the blind signature scheme can be termed "round optimal" as it involves the minimum number of messages between the user device 1 and the signer device 5.

Another advantage of the blind signature scheme described above with reference to Figure 1 is that the signature size is around 100 KB and supports unbounded many signatures.

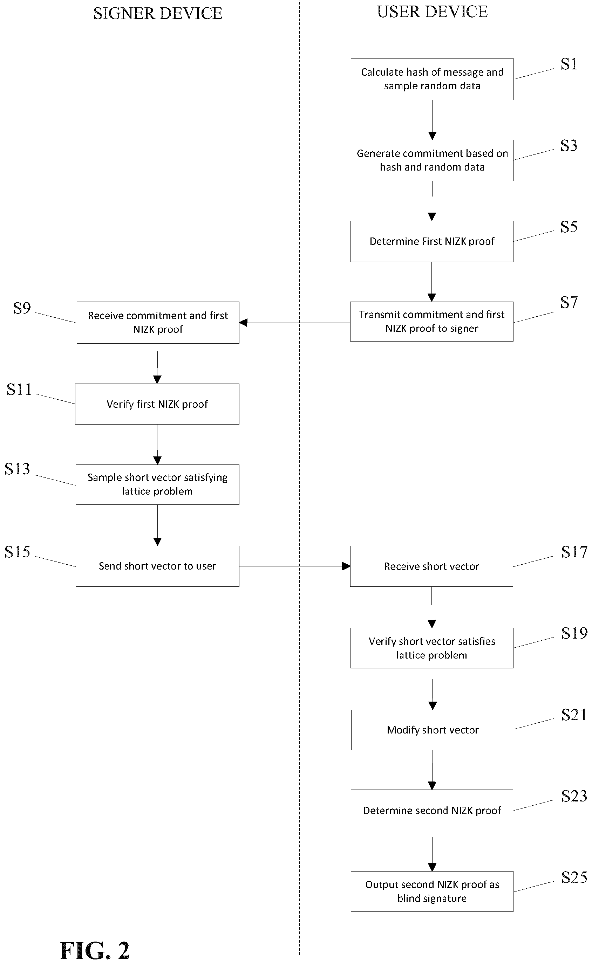

Further details of the blind signature scheme described above with reference to Figure 1 will now be provided with reference to Figure 2.

As shown in Figure 1, in order to generate a blind signature for the message $m$ the user device 1 first calculates, at S1, a cryptographic hash $h$ of the message $m$ using a hash function $H$ and uniformly samples random data $r$. The user device 1 then generates, at S3, a commitment based on the hash $h$ and the random data $r$. In particular, the commitment is generated using the function Com($m,r$) using the publicly available parameters $\mathbf{a_1}, \mathbf{a_2}, \mathbf{b_1} \ldots \mathbf{b_k}$, the publicly available gadget vector **g**, and the publicly available parameter $\mathbf{b_0}$ that is uniform in $\mathcal{R}_q^{k^2}$. The gadget vector **g** is usually

taken to be $\mathbf{g} := [1 \mid b \mid b^2 \mid \ldots \mid b^{k-1}]$ with $b = \lfloor \log_k(q) \rfloor$, but can be any vector in $\mathcal{R}_q^k$ if we only consider correctness.

The *Com(m,r)* function can be represented as follows:

$$
\begin{array}{l}
\hline
\mathrm{Com}\left(\mathbf{m} \in \mathcal{R}_q^k, r \in \{0,1\}^n\right) \\
\hline
\mathbf{r}_1, \ldots, \mathbf{r}_k \leftarrow \mathrm{Expand}(r) \\
\mathbf{A} := \begin{bmatrix} \mathbf{b}_0 & & \\ & \mathbf{b}_1 & \mathbf{0} \\ & & \ddots & \\ \mathbf{0} & & \mathbf{b}_k \end{bmatrix} \in \mathcal{R}_q^{(k+1) \times k^2} \\
\mathbf{c} := \mathbf{A} \cdot \begin{bmatrix} \mathbf{r}_1 \mid \ldots \mid \mathbf{r}_k \end{bmatrix}^\top + \begin{bmatrix} 0 \\ \mathbf{m}^\top \end{bmatrix} \in \mathcal{R}_q^{k+1} \\
\mathrm{Return}\ \mathbf{c} \\
\hline
\end{array}
$$

where the function Expand($r$) takes the n-bit random data $r$ as input and outputs $k$ uniform vectors $\mathbf{r}_1$, ..., $\mathbf{r}_k$ in $\mathcal{R}_q^k$.

The user device 1 then determines, at S5, the first NIZK proof $\pi_1$ using a zero-knowledge protocol $\Pi_1$ which, for a polynomial $h \in \mathcal{R}_q$ such that $\|h\| \le B_h$, and the commitment c proves knowledge of $h$ and $r$. In this example, the zero-knowledge protocol $\Pi_1$ is a straight line extractable proof.

The user device 1 then sends, at S7, the commitment c and the first NIZK proof $\pi_1$ to the signer device 5 (c.f, message M1 in Figure 1).

Following receipt, at S9, of the commitment c and the first NIZK proof $\pi_1$, the signer device 5 verifies, at S11, the first NIZK proof $\pi_1$ to validate the commitment c. If the verification fails no further action is taken. If the verification passes, the signer device 5 samples, at S13, the short vector **e** satisfying the lattice problem discussed above. This involves using the function ParseCom(c) to generate the target vector **t** and then using the secret trapdoor function 19 to determine the short vector **e** as discussed above.

Any vector $\mathbf{a}_1$ for which there exists a small (hidden) basis for the lattice orthogonal to $\mathbf{a}_1$ can be used as a trapdoored vector by using a preimage sampling algorithm such as that disclosed in the article "Trapdoors for hard lattices and new cryptographic constructions" by Gentry et al, 40th ACM STOC, pp. 197-206. In this example, the so-called NTRU trapdoor is used. For this trapdoor, the matrix $\mathbf{a}_1$ is of the form $[1 \mid h]$ where $h \in \mathcal{R}_q$ is the quotient of two small polynomials $h = g/f$ with typically $f$ and $g$ having co-efficients in $\{-1,0,1\}$. Such a matrix has a smaller trapdoor than the one proposed in the Gentry et al article referred to above.

The signer device 5 then sends the short vector **e** to the user device 1 (c.f. message M2 in Figure 1).

Following receipt, at S17, of the short vector **e**, the user device 1 verifies, at S19, that the short vector **e** satisfies the lattice problem. Then, as discussed in detail above, the user device 1 modifies, at S21, the short vector **e** to generate the modified short vector $\tilde{\mathbf{e}}$ and determines the second NIZK proof $\pi_2$. The user device 1 then outputs the second NZIK proof $\pi_2$, for example along with the message $m$ to the recipient device 3 (c.f. message M3 in Figure 1).

The blind signature algorithm described with reference to Figures 1 and 2 can be represented by the following pseudocode:

| $\Pi_{\mathsf{BS}} : \mathcal{S}(\mathrm{T}_{\mathbf{a}_1})$ | | $\mathcal{U}(m)$ |
|---|---|---|
| | | $h := H(m)$ |
| | | $r \leftarrow \{0,1\}^n$ |
| | $\overset{c,\pi_1}{\longleftarrow}$ | $c := \mathsf{Com}(hg, r)$ |
| | | $\pi_1 \leftarrow \Pi_1(c, (h, r))$ |
| $\mathsf{Verify}(\pi_1)$ | | |
| $\mathbf{t} := \mathsf{ParseCom}(c)$ | | |
| $\mathsf{Sample}\ \mathbf{e} \in R^{k(2+k)}\ \text{such that:}$ | $\overset{\mathbf{e}}{\longrightarrow}$ | |
| $\quad [\mathbf{a}_1 \mid \mathbf{a}_2 + \mathbf{t} \mid \mathbf{b}_1 \mid \dots \mid \mathbf{b}_k]\, \mathbf{e}^\mathsf{T} = u$ | | |
| $\quad \wedge\ \|\mathbf{e}\| \le B$ | | |
| | | $(\mathbf{t}, (\mathbf{r}_1, \dots, \mathbf{r}_k)) := (\mathsf{ParseCom}(c), \mathsf{ParseRand}(r))$ |
| | | $\mathsf{Check}:\ [\mathbf{a}_1 \mid \mathbf{a}_2 + \mathbf{t} \mid \mathbf{b}_1 \mid \dots \mid \mathbf{b}_k]\, \mathbf{e}^\mathsf{T} = u$ |
| | | $\quad \wedge\ \|\mathbf{e}\| \le B$ |
| | | $\tilde{\mathbf{e}} := [\mathbf{e}_1 \mid \mathbf{e}_2 \mid e_{2,1}\mathbf{r}_1 + \mathbf{e}_{3,1} \mid \dots \mid e_{2,k}\mathbf{r}_k + \mathbf{e}_{3,k}]$ |
| | | $\tilde{\mathbf{a}} := [\mathbf{a}_1 \mid \mathbf{a}_2 + hg \mid \mathbf{b}_1 \mid \dots \mid \mathbf{b}_k]$ |
| | | $\pi_2 \leftarrow \Pi_2((\tilde{\mathbf{a}}, u), \tilde{\mathbf{e}})$ |
| | | $\mathsf{return}\ \pi_2$ |

In this pseudocode, the function ParseRand determines the vectors $\mathbf{r}_1$, ..., $\mathbf{r}_k$ using the function Expand(r) discussed above.

**Modifications and Further Embodiments**

In the example described above, the user device 1 uses a straight-line extractable proof to determine the first NIZK proof $\pi_1$. Compared, for example, with the Fiat-Shamir with Abort proof, the straight-line extractable proof is comparatively complicated and gives a larger proof size but also provides an improved security. For applications where loss of security is not an important issue, other protocols such as those based on the Fiat-Shamir with Abort proof, could be used, or the first NIZK proof $\pi_1$ could even be dispensed with completely.

Lattice-based proofs are known to have a "slack" in that the secret proven is larger than the actual known secret, but recently lattice-based proofs have been developed that remove this slack at the expense of increased proof size. Accordingly, there is an interplay between desired security, proof size and processing complexity to be taken into account when selecting the zero-knowledge protocol $\Pi_1$ for the first NIZK proof $\pi_1$. In contrast, for the second NIZK proof $\pi_2$, the only concern is proof size and any NIZK protocol $\Pi_2$ could be used.

The blind signature scheme described above with reference to Figures 1 and 2 can easily be converted into a partially blind signature scheme. Partially blind signatures are an extension of blind signatures in which a signer device 5 can include information in the message $m$, such as for example an expiration date or a revocation of old signatures. To bind the signature to a specific message $\mu$, the righthand side of the lattice problem simply needs to be modified from $u$ to $u$ - $H(\mu)$.

The public parameters $\mathbf{b}_1$,..., $\mathbf{b}_k$ can be selected such that $\mathbf{b}_1 = \mathbf{b}_2 = ... = \mathbf{b}_k$. This allows the signer device 5 simply to sample a short vector e such that:

$$[\mathbf{a}_1 \mid \mathbf{a}_2 + \mathbf{t} \mid \mathbf{b}_1] \cdot \mathbf{e} = u.$$

Doing so reduces the signature size, at the expense of increasing the complexity of the zero-knowledge protocol $\Pi_2$.

Further modifications to the lattice problem are possible. For example, the public parameters $\mathbf{b}_1$,..., $\mathbf{b}_k$ are only included for security reduction and may be omitted from the lattice problem such that the signer device 5 samples a pre-image for $[\mathbf{a}_1 \mid \mathbf{a}_2 + \mathbf{t}]$. Even the public parameter $\mathbf{a}_2$ could be omitted such that the signer device 5 samples a pre-image for $[\mathbf{a}_1 \mid \mathbf{t}]$, although this would potentially make the blind signature scheme vulnerable to attack.

In order to further simplify the blind signature scheme, the NIZK protocol $\Pi_2$ could be replaced by, for example, a signature conveying $\tilde{\mathbf{a}}$ and $\tilde{\mathbf{e}}$ allowing the recipient device 3 to verify that $\tilde{\mathbf{a}} \cdot \tilde{\mathbf{e}} = u$, although this potentially breaks the unlinkability of the blind signature scheme given the similarity between the short vector e and the modified short vector

$\tilde{\mathbf{e}}$. Alternatively, the user device may sample a small vector $\mathbf{f} \in \mathcal{R}_q^{2k+k}$ and send $u' = [\mathbf{a}_1 \mid \mathbf{a}_2 + \mathbf{t} \mid \mathbf{b}_1 \mid ... \mid \mathbf{b}_k]\mathbf{f}^\mathsf{T}$ to the signer device together with the commitment c and possibly the first NIZK proof $\pi_1$. The user device can subsequently output $\tilde{\mathbf{e}} + \mathbf{f}$ as the signature. Depending on whether rejection sampling is used and the size of $\mathbf{f}$, this technique can hide the modified short vector $\tilde{\mathbf{e}}$. This technique can be further refined by sampling multiple vectors $\mathbf{f}$ and storing the multiple vectors $\mathbf{f}$ in a hash tree to make rejection sampling succeed with overwhelming probability.

In the blind signature schemes described above, the public parameters $\mathbf{a_1}$, $\mathbf{a_2}$, $\mathbf{b_1}$,..., $\mathbf{b_k}$ are all vectors in $\mathcal{R}_q^k$. Alternatively, the blind signature scheme can accommodate the public parameters as matrices instead of vectors and use different column dimensions for each matrix. For example: instead of the vector $\mathbf{a_1}$, a matrix

$$\mathbf{A_1}$$

$$\in \mathcal{R}_q^{n \times k_{A_1}}$$

could be used; instead of the vector $\mathbf{a_2}$ and the target vector $\mathbf{t}$, matrices $\mathbf{A_2}$ and

$$\mathbf{T} \in \mathcal{R}_q^{n \times k_{A_2}}$$

could be used; and instead of the vectors $\mathbf{b_1}$, ..., $\mathbf{b_k}$, matrices $\mathbf{B}_i$ in

$$\mathcal{R}_q^{n \times k_{B_i}}$$

could be used. Using matrices instead of the vectors for the public parameters can provide better granularity.

The cryptographic functions discussed above may be implemented in software, hardware or a combination of software of hardware. Accordingly, the operations of the user device 1 and the signer device 5 discussed above could be implemented as processor-implementable instructions which, when executed by a processor, perform their respective functions. Alternatively, the functions of the user device 1 and the signer device 5 discussed above could be implemented by a hardware circuit, for example an FPGA or an ASIC, which performs their respective functions, or a combination of processor-implementable instructions and hardware. Whether the functions are implemented by software, a hardware device or a mixture of software and a hardware device, the functions can be said to be implemented by modules of the user device 1 and the signer device 5.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1.  A computer-implemented method of generating a signature for a message comprising:

    at a user device:
    processing the message $m$ and random data $r$ to generate a commitment $c$ for the message and transmitting the commitment $c$ to a signer device;
    at the signer device:
    deriving a target vector $\mathbf{t}$ from the commitment $c$;
    sampling, using a secret trapdoor function, a short vector $\mathbf{e}$ that solves a lattice problem $\mathbf{A} \cdot \mathbf{e}^T = u$, wherein:

      $\mathbf{A}$ is a matrix of the form $[\mathbf{a_1} \mid \mathbf{v}]$ where $\mathbf{a_1}$ is a public parameter and $\mathbf{v}$ is dependent on the target vector $\mathbf{t}$;
      $u$ is a polynomial; and

the secret trapdoor function is associated with the public parameter $\mathbf{a_1}$ such that for any $\mathbf{v} \in \mathcal{R}_q^n$, the signer device can sample a short vector $\mathbf{e} \in \mathcal{R}_q^{n+k}$ for which $\|\mathbf{e}\|$ is smaller than a bounding value $B$ and $[\mathbf{a_1} \mid \mathbf{v}]\,\mathbf{e}^T = u$; and

transmitting the short vector $\mathbf{e}$ to the user device,

and at the user device:

verifying that the short vector $\mathbf{e}$ solves the lattice problem; and
generating a signature establishing knowledge of the short vector $\mathbf{e}$ based on the message and public data.

2. The computer-implemented method of claim 1, wherein the generation of the commitment $c$ comprises:

generating a hash $h$ of the message; and
generating a commitment $c$ based on the hash $h$ and the random data $r$.

3. The computer-implemented method of claim 2, wherein the commitment $c$ is of the form:

$$\mathbf{A} \cdot [\mathbf{r_1} \mid \ldots \mid \mathbf{r_k}]^T + [{}^{0}_{h\mathbf{g}^T}]$$

where $h$ is the hash of the message and

$$\mathbf{A} := \begin{bmatrix} b_0 & & \\ b_1 & & \mathbf{0} \\ & \ddots & \\ \mathbf{0} & & b_k \end{bmatrix} \in \mathcal{R}_q^{(k+1)\times k^2}$$

4. The computer-implemented method of claim 2 or claim 3, further comprising generating a first non-interactive-zero-knowledge proof establishing knowledge of the hash $h$ and the random data $r$.

5. The method of claim 3 or claim 4, wherein the target vector $\mathbf{t}$ corresponds to the lowest k rows of the commitment.

6. The method of any preceding claim, wherein the lattice problem is of the form:

$$\left[\mathbf{a_1} \mid \mathbf{a_2} + \mathbf{t} \mid \mathbf{b_1} \mid \ldots \mid \mathbf{b}_k\right]\mathbf{e}^\top = u$$

$$\wedge \|\mathbf{e}\| \leq B$$

where $\mathbf{a_2}$ is a public parameter.

7. The method of claim 6, wherein the signer device provides information $\mu$ for to accompany the message $m$, and for the righthand side of the lattice problem $u = u' - H(\mu)$ where $u'$ is a polynomial.

8. The method of any preceding claim, wherein establishing knowledge of the short vector $\mathbf{e}$ based on the message $m$ and public data comprises generating a second non-interactive-zero-knowledge proof.

9. The method of claim 8, wherein establishing the non-interactive-zero-knowledge proof comprises recasting the lattice problem equation into the form:

$$\tilde{\mathrm{a}} \cdot \tilde{\mathrm{e}}^{\top} = \mathrm{a} \cdot \mathrm{e}^{\top} = u$$

where $\tilde{\mathbf{a}}$ is derivable from the message and the public data,
wherein the non-interactive-zero-knowledge-proof establishes knowledge of $\tilde{e}$ from the message $m$ and the public data.

10. A user device configured to:

process a message $m$ and random data $r$ to generate a commitment $c$ for the message $m$;
transmit the commitment $c$ to a signer device;
in response to the transmission of the commitment c, receive a short vector $\mathbf{e}$ from the signer device;
verify that the short vector $\mathbf{e}$ solves a lattice problem; and
generate a signature establishing knowledge of the short vector $\mathbf{e}$ based on the message $m$ and public data.

11. A user device according to claim 10, wherein the generation of the commitment comprises:

generating a hash ($h$) of the message; and
generating a commitment based on the hash and random data, wherein the commitment is of the form:

$$\mathbf{A} \cdot [\mathbf{r_1} \mid \ldots \mid \mathbf{r_k}]^{\mathrm{T}} + \begin{bmatrix} 0 \\ h\mathbf{g}^T \end{bmatrix}$$

where $\mathbf{r_1} \ldots \mathbf{r_k}$ are random parameters derived from the random data ($r$), $h$ is the hash of the message, $\mathbf{g}$ is a gadget vector and

$$\mathbf{A} := \begin{bmatrix} \mathrm{b}_0 & & \\ \mathrm{b}_1 & & \mathbf{0} \\ & \ddots & \\ \mathbf{0} & & \mathrm{b}_k \end{bmatrix} \in \mathcal{R}_q^{(k+1) \times k^2}$$

and wherein the target vector corresponds to the lowest k rows of the commitment.

12. The user device of claim 11, wherein the lattice problem is of the form:

$$\begin{bmatrix} \mathrm{a}_1 \mid \mathrm{a}_2 + \mathbf{t} \mid \mathrm{b}_1 \mid \ldots \mid \mathrm{b}_k \end{bmatrix} \mathbf{e}^{\top} = u$$

$$\wedge \|\mathbf{e}\| \leq B$$

where $\mathbf{a_1}$ and $\mathbf{a_2}$ are public parameters, $\mathbf{e}$ is the short vector, $\mathbf{t}$ is a target vector, $u$ is public random data and $B$ is a fixed bounding value.

13. The user device of any of claims 10 to 12, wherein generating the signature comprises establishing a non-interactive-zero-knowledge proof establishing knowledge of the short vector based on the message and public data,

wherein optionally establishing the second non-interactive-zero-knowledge proof comprises recasting the lattice problem equation into the form:

$$\tilde{\mathrm{a}} \cdot \tilde{\mathrm{e}}^{\top} = \mathrm{a} \cdot \mathrm{e}^{\top} = u$$

where $\tilde{\mathbf{a}}$ is derivable from the message and the public data,
wherein the non-interactive-zero-knowledge-proof establishes knowledge of $\tilde{e}$ from the message and the public data.

**14.** A device for signing a message, the device having access to a secret trapdoor function and being configured to:

receive a commitment $c$ from a user device, the commitment c corresponding to a message $m$ to be signed;
derive a target vector t from the commitment $c$;
sample, using the secret trapdoor function, a short vector **e** that solves a lattice problem $\mathbf{A} \cdot \mathbf{e}^T = u$, wherein:

**A** is a matrix of the form $[\mathbf{a_1} \mid \mathbf{v}]$ where $\mathbf{a_1}$ is a public parameter and **v** is dependent on the target vector **t**;
$u$ is a polynomial; and

the secret trapdoor function is associated with the public parameter $\mathbf{a_1}$ such that for any $\mathbf{v} \in \mathcal{R}_q^n$, the signer device can sample a short vector $\mathbf{e} \in \mathcal{R}_q^{n+k}$ for which $\|\mathbf{e}\|$ is smaller than a bounding value $B$ and $[\mathbf{a_1} \mid \mathbf{v}]\,\mathbf{e}^T = u$; and transmit the short vector to the user device.

**15.** The device of claim 14, wherein the device is configured to provide information $\mu$ for to accompany the message $m$, and the righthand side of the lattice problem is of the form $u - H(\mu)$.

FIG. 1

SIGNER DEVICE | USER DEVICE

S1 — Calculate hash of message and sample random data

S3 — Generate commitment based on hash and random data

S5 — Determine First NIZK proof

S7 — Transmit commitment and first NIZK proof to signer

S9 — Receive commitment and first NIZK proof

S11 — Verify first NIZK proof

S13 — Sample short vector satisfying lattice problem

S15 — Send short vector to user

S17 — Receive short vector

S19 — Verify short vector satisfies lattice problem

S21 — Modify short vector

S23 — Determine second NIZK proof

S25 — Output second NIZK proof as blind signature

# FIG. 2

Europäisches
Patentamt

European
Patent Office

Office européen
des brevets

# EUROPEAN SEARCH REPORT

Application Number

EP 22 30 5843

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHWETA AGRAWAL ET AL: "Practical, Round-Optimal Lattice-Based Blind Signatures", IACR, INTERNATIONAL ASSOCIATION FOR CRYPTOLOGIC RESEARCH , vol. 20220316:143808 16 March 2022 (2022-03-16), pages 1-18, XP061070811, Retrieved from the Internet: URL:https://eprint.iacr.org/2021/1565.pdf [retrieved on 2022-03-16] | 1-4, 6-10, 12-15 | INV. H04L9/30 H04L9/32 |
| A | * sections 1-4, figures 1, 2 * ----- | 5,11 | |
| A | MARC FISCHLIN ED - CYNTHIA DWORK: "Round-Optimal Composable Blind Signatures in the Common Reference String Model", 20 August 2006 (2006-08-20), ADVANCES IN CRYPTOLOGY - CRYPTO 2006 LECTURE NOTES IN COMPUTER SCIENCE;;LNCS, SPRINGER, BERLIN, DE, PAGE(S) 60 - 77, XP047029563, ISBN: 978-3-540-37432-9 * the whole document * ----- | 1-15 | |
| A | DEL PINO RAFAEL RAFAEL DEL PINO@ENS FR ET AL: "Lattice-Based Group Signatures and Zero-Knowledge Proofs of Automorphism Stability", PROCEEDINGS OF THE 2018 IEEE/ACM INTERNATIONAL CONFERENCE ON CONNECTED HEALTH: APPLICATIONS, SYSTEMS AND ENGINEERING TECHNOLOGIES, ACMPUB27, NEW YORK, NY, USA, 15 October 2018 (2018-10-15), pages 574-591, XP058701180, DOI: 10.1145/3243734.3243852 ISBN: 978-1-4503-6120-0 * sections 2-6; figure 1 * ----- | 1-15 | |

TECHNICAL FIELDS SEARCHED (IPC)

H04L

The present search report has been drawn up for all claims

| Place of search | Date of completion of the search | Examiner |
|---|---|---|
| Munich | 18 November 2022 | Spranger, Stephanie |

EPO FORM 1503 03.82 (P04C01)

**EP 4 290 805 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GENTRY et al.** Trapdoors for hard lattices and new cryptographic constructions. *40th ACM STOC,* 197-206